# EUROPÄISCHE PATENTSCHRIFT

(11) **EP 3 882 493 B1**
(45) Veröffentlichungstag und Bekanntmachung des Hinweises auf die Patenterteilung: **14.06.2023**
(21) Anmeldenummer: 21157276.3
(22) Anmeldetag: 16.02.2021
(51) Int. Cl.: F16H 57/04, F16H 57/08

(54) **PLANETENTRÄGER MIT RINNE ZUR VERSORGUNG EINER PASSVERZAHNUNG MIT ÖL**
PLANET CARRIER WITH A CHANNEL FOR SUPPLYING PASSIVE GEARING WITH OIL
PORTE SATELLITES POURVU DE CANAL D'ALIMENTATION EN HUILE D'UNE DENTURE DE PASSAGE

(30) Priorität: 16.03.2020 DE 102020203346
(43) Veröffentlichungstag der Anmeldung: 22.09.2021
(73) Patentinhaber: ZF Friedrichshafen AG, 88046 Friedrichshafen (DE)
(72) Erfinder: Fauck, Matthias, 28452 Witten (DE)
(74) Vertreter: ZF Friedrichshafen AG

(56) Entgegenhaltungen:
- EP-A2- 3 121 488
- CN-A- 108 253 124
- DE-A1-102016 202 533
- JP-A- 2013 181 634

## Beschreibung

Die Erfindung betrifft ein Getriebe nach dem Oberbegriff von Anspruch 2 und einen Planetenträger nach dem Oberbegriff von Anspruch 1.

Aus dem Stand der Technik sind Planetenträger mit einer Passverzahnung bekannt. Die Passverzahnung dient dazu, den Planetenträger drehfest mit einer Welle zu verbinden, die eine entsprechende Passverzahnung aufweist. Siehe zum Beispiel JP2013181634A.

Der Erfindung liegt die Aufgabe zugrunde, die Haltbarkeit und Belastbarkeit eines Planetenträgers zu verbessern, der mindestens eine Passverzahnung ausbildet. Diese Aufgabe wird gelöst durch ein Getriebe nach Anspruch 2 und einen Planetenträger nach Anspruch 1.

Bevorzugte Weiterbildungen sind in den Unteransprüchen enthalten und ergeben sich aus nachfolgender Beschreibung sowie dem in den Figuren dargestellten Ausführungsbeispiel.

Das erfindungsgemäße Getriebe weist mindestens einen Planetenträger auf. Ein Planetenträger ist Teil einer Planetenstufe, die darüber hinaus ein Sonnenrad, ein Hohlrad und ein oder mehrere Planetenräder umfasst. Die Planetenräder sind drehbar in dem Planetenträger gelagert und kämmen mit dem Sonnenrad und/oder dem Hohlrad. Mindestens zwei der drei Komponenten Planetenträger, Sonnenrad und Hohlrad sind um eine gemeinsame Drehachse drehbar gelagert.

Das Getriebe ist bevorzugt als Vertikalgetriebe ausgebildet. Dies bedeutet, dass eine Hauptachse des Getriebes, das heißt eine Achse, welche die Ausrichtung des Getriebes beschreibt, überwiegend senkrecht verläuft. Eine überwiegend senkrecht verlaufende Achse zeichnet sich dadurch aus, dass sie mit einer senkrechten, das heißt einer senkrecht verlaufenden Geraden, einen Winkel von weniger als 45° einschließt. Insbesondere kann das Getriebe vollständig senkrecht ausgerichtet sein. Der genannte Winkel beträgt dann 0°.

Eine Drehachse des Planetenträgers verläuft entlang der Ausrichtung des Getriebes. Die Drehachse des Planetenträgers ist also parallel zu der Achse, welche die Ausrichtung des Getriebes beschreibt. Der Planetenträger ist überwiegend senkrecht ausgerichtet. Ein Winkel, den die Drehachse des Planetenträgers und eine Vertikale einschließen, ist also kleiner als 45°. Insbesondere kann der Planetenträger vollständig senkrecht ausgerichtet sein. Der genannte Winkel beträgt dann 0°.

Der Planetenträger bildet mindestens einen Teil einer Passverzahnung aus. Eine Passverzahnung ist eine Vielfach-Mitnehmerverbindung. Sie besteht aus einer ersten Verzahnung und einer zweiten Verzahnung. Die erste Verzahnung und die zweite Verzahnung sind koaxial zueinander ausgerichtet und greifen derart ineinander ein, dass zwischen den beiden Verzahnungen eine drehfeste Verbindung entsteht. Insbesondere kann das Getriebe eine Welle aufweisen, die über die Passverzahnung drehfest mit dem Planetenträger verbunden ist.

Der mindestens eine Teil der von dem Planetenträger ausgebildeten Passverzahnung ist vorzugsweise zentrisch, das heißt koaxial zu der Drehachse des Planetenträgers ausgerichtet. Eine Mittelachse des mindestens einen Teils der Passverzahnung stimmt dann mit der Drehachse überein.

Erfindungsgemäß weist der Planetenträger mindestens eine mindestens teilweise nach oben hin offene Rinne auf. Dies ist eine Wandung mit genau einer Mündung und länglichem Verlauf. Die Wandung wird durch den Planetenträger ausgebildet. Entlang des Verlaufs der Rinne ist ihre Breite, das heißt ein Abstand zwischen gegenüberliegenden Seiten der Wandung über die Mündung hinweg vorzugsweise gleichbleibend. Die Seiten der Wandung bilden die Mündung. Die Wandung ist mindestens teilweise nach oben hin offen und nach unten hin geschlossen. Die Mündung der Rinne weist also nach oben. Die Rinne kann beispielsweise durch eine Nut, das heißt eine längliche Vertiefung einer Oberfläche des Planetenträgers, oder durch zwei aus der Oberfläche des Planetenträgers auskragende Stege gebildet werden.

Zwischen der Rinne und der Passverzahnung besteht eine ölleitende Verbindung. Da die Rinne mindestens teilweise nach oben hin offen ist, ist sie in der Lage, Öl zu sammeln. Dieses wird durch die ölleitende Verbindung in die Passverzahnung eingeleitet. Dadurch kommt eine Schmierung der Passverzahnung zustande.

Die Erfindung ist von Vorteil, da sie sich konstruktiv sehr einfach realisieren lässt. Aufwändige und defektanfällige Drehdurchführungen und Dichtungen sind verzichtbar.

In einer bevorzugten Weiterbildung ist die Rinne mindestens teilweise oberhalb der Passverzahnung angeordnet. Insbesondere kann die Rinne vollständig oberhalb der Passverzahnung angeordnet sein. Durch den weiterbildungsgemäßen Höhenunterschied zwischen mindestens einem Teil der Rinne und der Passverzahnung steht zwischen der Rinne und der Passverzahnung eine Potentialdifferenz. Diese lässt das Öl aus der Rinne in die Passverzahnung abfließen.

Vorteilhaft ist insbesondere eine Anordnung einer Mündung der ölleitenden Verbindung in die Rinne oberhalb einer Mündung der ölleitenden Verbindung in die Passverzahnung bei mindestens einer Drehwinkelstellung des Planetenträgers. Die Drehwinkelstellung des Planetenträgers kennzeichnet einen Drehwinkel des Planetenträgers bezüglich einer Drehung um seine Drehachse.

Die beschriebene Anordnung der Mündungen bewirkt, dass das in der Rinne gesammelte Öl aufgrund seiner eigenen Schwerkraft durch die ölleitende Verbindung in die Passverzahnung gefördert wird.

Vorzugsweise sind die Mündungen der ölleitenden Verbindung so angeordnet, dass die Mündung in die Rinne sich unabhängig von der Drehwinkelstellung des Planetenträgers oberhalb der Mündung in die Passverzahnung befindet. Die bewirkt, sodass permanent Öl aufgrund seiner eigenen Schwerkraft von der Rinne durch die ölleitende Verbindung in die Passverzahnung gefördert wird.

Bevorzugt ist das Getriebe mit mindestens einem Durchbruch zwischen der Rinne und der Passverzahnung weitergebildet. Bei dem Durchbruch handelt es sich um eine Ausnehmung, welche die Rinne und die Passverzahnung ölleitend miteinander verbindet. Der Durchbruch kann als eine bezüglich der Drehachse des Planetenträgers radial verlaufende Nut oder eine Einkerbung desjenigen Stegs ausgebildet sein, der ausgehend von dem anderen Steg bezüglich der Drehachse des Planetenträgers radial weiter innen angeordnet ist. Alternativ kann der Planetenträger eine Bohrung aufweisen, welche die ölleitende Verbindung darstellt, die also die Rinne ölleitend mit der Passverzahnung verbindet.

In einer darüber hinaus bevorzugten Weiterbildung hat die Rinne eine rotationssymmetrische Grundform. Die Grundform eines Körpers bezeichnet die Form eines ursprünglichen Körpers, aus dem der erstgenannte Körper durch Eliminieren einzelner Bereiche, etwa durch Einfügen von Aussparungen, und/oder durch Hinzufügen einzelner Bereiche entstanden ist. Die weiterbildungsgemäß ausgeführte Rinne kann insbesondere aus einer Rinne mit rotationssymmetrischer Form durch Einfügen einer oder mehrerer Aussparungen, welche die mindestens eine ölleitende Verbindung bilden, entstanden sein. Die Weiterbildung ist von Vorteil, da sie eine Ölversorgung der Passverzahnung unabhängig von der Winkellage des Planetenträgers ermöglicht.

Die Erfindung wird auch realisiert durch einen Planetenträger, welcher die auf den mindestens einen Planetenträger des erfindungsgemäßen Getriebes bezogenen Merkmale realisiert.

Ein bevorzugtes Ausführungsbeispiel der Erfindung ist in den Figuren dargestellt. Übereinstimmende Bezugsziffern kennzeichnen dabei gleiche oder funktionsgleiche Merkmale. Im Einzelnen zeigt:
Fig. 1 eine Darstellung eines Planetenträgers in einer Ansicht; und
Fig. 2 eine Schnittdarstellung desselben Planetenträgers.

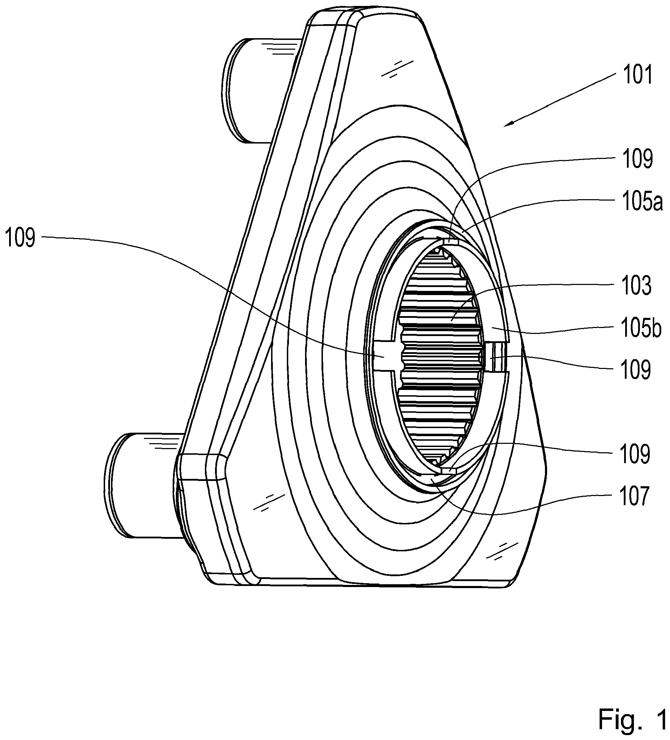

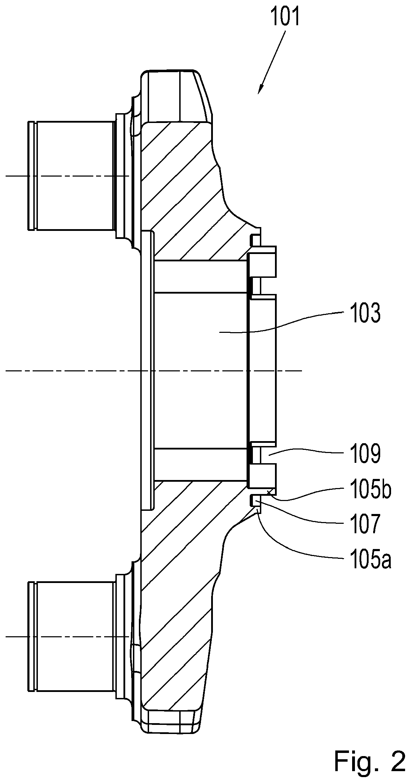

Der in den Figuren 1 und 2 dargestellte Planetenträger 101 ist mit einer mittig angeordneten Passverzahnung 103 versehen. Um die Passverzahnung 103 mit Öl zu versorgen, bildet der Planetenträger 101 einen ersten Steg 105a und einen zweiten Steg 105b aus.

Die Stege 105a, 105b verlaufen konzentrisch um eine Dreh- und Mittelachse des Planetenträgers 101. Sie sind zu der Dreh- und Mittelachse rotationssymmetrisch. Durch diese Anordnung bilden die Stege 105a, 105b eine Rinne 107. Ist der Planetenträger 101 bzw. dessen Dreh- und Mittelachse senkrecht ausgerichtet, sammelt sich in der Rinne 107 Öl.

Der zweite Steg 105b verläuft zwischen dem ersten Steg 105a und der Passverzahnung 103. Um das in der Rinne 107 gesammelte Öl in die Passverzahnung 103 einzuleiten, ist der zweite Steg 105b mit Ausbrüchen 109 versehen. Diese verbinden die Rinne 107 ölleitend mit der Passverzahnung 103.

### Bezugszeichen

- 101: Planetenträger
- 103: Passverzahnung
- 105a: erster Steg
- 105b: zweiter Steg
- 107: Rinne
- 109: Ausbruch

## Patentansprüche

1. Planetenträger (101), der mindestens einen Teil einer Passverzahnung (103) ausbildet; **gekennzeichnet durch**
mindestens eine durch eine Nut oder zwei aus der Oberfläche des Planetenträgers auskragende Stege gebildete Rinne (107), deren Mündung nach oben weist, wenn ein Winkel, den die Drehachse des Planetenträgers (101) und eine Vertikale einschließen, kleiner ist als 45°; wobei
zwischen der Rinne (107) und der Passverzahnung (107) eine ölleitende Verbindung besteht.

2. Getriebe mit mindestens einem Planetenträger (101) nach Anspruch 1;
**dadurch gekennzeichnet, dass**
die Rinne (107) mindestens teilweise oberhalb der Passverzahnung (103) angeordnet ist.

3. Getriebe nach Anspruch 2;
**gekennzeichnet durch**
mindestens einen Durchbruch (109) zwischen der Rinne (107) und der Passverzahnung (103).

4. Getriebe nach einem der vorhergehenden zwei Ansprüche; **dadurch gekennzeichnet, dass** die Rinne (107) eine rotationssymmetrische Grundform hat.

## Claims

1. Planet carrier (101) forming at least one part of a spline toothing (103); **characterized by**
at least one channel (107) which is formed by a groove or by two webs which protrude from the surface of the planet carrier, the opening of which at least one channel faces upwards if an angle included by the axis of rotation of the planet carrier (101) and a vertical is less than 45°; wherein
there is an oil-conducting connection between the channel (107) and the spline toothing (107).

2. Gear mechanism having at least one planet carrier (101) according to Claim 1;
**characterized in that**
the channel (107) is arranged at least partially above the spline toothing (103).

3. Gear mechanism according to Claim 2; **characterized by** at least one aperture (109) between the channel (107) and the spline toothing (103).

4. Gear mechanism according to either of the preceding two claims; **characterized in that**
the channel (107) has a circularly symmetrical basic shape.

## Revendications

1. Porte-satellites (101) formant au moins une partie d'une denture d'ajustement (103) ; **caractérisé par**
au moins une rainure (107) formée par une gorge ou deux nervures faisant saillie de la surface du porte-satellites, dont l'embouchure est dirigée vers le haut lorsqu'un angle formé par l'axe de rotation du porte-satellites (101) et une verticale est inférieur à 45° ;
une liaison conductrice d'huile existant entre la rainure (107) et la denture d'ajustement (107).

2. Engrenage avec au moins un porte-satellites (101) selon la revendication 1 ;
**caractérisé en ce que**
la rainure (107) est agencée au moins partiellement au-dessus de la denture d'ajustement (103).

3. Engrenage selon la revendication 2 ; **caractérisé par** au moins un passage (109) entre la rainure (107) et la denture d'ajustement (103).

4. Engrenage selon l'une quelconque des deux revendications précédentes, **caractérisé en ce que** la rainure (107) a une forme de base à symétrie de révolution.
